# EUROPEAN PATENT APPLICATION

(11) **EP 4 749 481 A1**
(43) Date of publication of application: **27.05.2026**
(21) Application number: 24842363.4
(22) Date of filing: 16.07.2024
(51) Int. Cl.: G06F 16/9535

(54) **INFORMATION DISPLAY METHOD AND APPARATUS, DEVICE AND STORAGE MEDIUM**

(30) Priority: 17.07.2023 CN 202310876772
(71) Applicant: Beijing Zitiao Network Technology Co., Ltd., Beijing 100190 (CN)
(72) Inventor: SUN, Xiuwen, Beijing 100028 (CN); ZHAO, Chunmeng, Beijing 100028 (CN); DUAN, Chang, Beijing 100028 (CN)
(74) Representative: Grünecker Patent- und Rechtsanwälte PartG mbB
(86) International application number: PCT/CN2024/105629
(87) International publication number: WO 2025/016374

(57) **Abstract**

Provided are an information display method and apparatus, a device, and a storage medium. The information display method comprises: displaying in a preset interface a first hot information ranking list and second hot information, the first hot information ranking list comprising multiple pieces of first hot information sorted and displayed according to a preset order, first attention level attributes of the first hot information being associated with multiple users, the preset order being determined on the basis of the first attention level attributes, at least one piece of second hot information being displayed between at least two pieces of first hot information, the second hot information being associated with the current user, and a display mode of the first hot information being different from a display mode of the second hot information (101).

## Description

This application claims the priority of Chinese Patent Application No.202310876772.0 filed on July 17, 2023, which is incorporated herein by reference in its entirety as a part of this application.

### TECHNICAL FIELD

The present disclosure relates to an information display method and apparatus, a device and a storage medium.

### BACKGROUND

With the rapid development of Internet technology, people can acquire more and more information. At present, in order to help the user look up trending information quickly, trending information list may be displayed to the user, and in the trending information list, various trending information is ranked and displayed according to related attributes such as the attention of the platform users.

### SUMMARY

Embodiments of the present disclosure provide an information display method and apparatus, a storage medium, and a device, which can optimize existing information display solutions.

In a first aspect, an embodiment of the present disclosure provides an information display method, which includes:
displaying a first trending information list and second trending information in a preset interface,
where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

In a second aspect, an embodiment of the present disclosure provides an information display apparatus, which includes:
an information display module, configured to display a first trending information list and second trending information in a preset interface,
where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

In a third aspect, an embodiment of the present disclosure provides an electronic device, which includes:
one or more processors; and
a storage apparatus, configured to store one or more programs,
where the one or more programs, upon being executed by the one or more processors, cause the one or more processors to implement the information display method provided by an embodiment of the present disclosure.

In a fourth aspect, an embodiment of the present disclosure provides a storage medium, including computer-executable instructions. The computer-executable instructions, upon being executed by a computer processor, are configured to implement the information display method provided by an embodiment of the present disclosure.

### BRIEF DESCRIPTION OF DRAWINGS

The above and other features, advantages, and aspects of the embodiments of the present disclosure will become more apparent when taken in conjunction with the drawings and with reference to the following detailed description. Throughout the drawings, the same or similar reference numbers refer to the same or similar elements. It should be understood that the drawings are schematic and that parts and elements are not necessarily drawn to scale.
Fig. 1 is a flowchart of an information display method according to an embodiment of the present disclosure;
Fig. 2 is a schematic diagram of an interface according to an embodiment of the present disclosure;
Fig. 3 is a schematic diagram of another interface according to an embodiment of the present disclosure;
Fig. 4 is a schematic diagram of interaction of an interface according to an embodiment of the present disclosure;
Fig. 5 is a flowchart of another information display method according to an embodiment of the present disclosure;
Fig. 6 is a schematic diagram of interaction of another interface according to an embodiment of the present disclosure;
Fig. 7 is a schematic structural diagram of an information display apparatus according to an embodiment of the present disclosure; and
Fig. 8 is a schematic structural diagram of an electronic device according to an embodiment of the present disclosure.

### DETAILED DESCRIPTION

The embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a more thorough and complete understanding of the present disclosure. It should be understood that the drawings and embodiments of the present disclosure are only for illustrative purposes and are not intended to limit the scope of protection of the present disclosure.

It should be understood that the various steps recited in the method implementations of the present disclosure may be performed in a different order and/or in parallel. **In** addition, method implementations may include additional steps and/or omit to perform the illustrated steps. The scope of the present disclosure is not limited in this respect.

As used herein, the term "include/comprise" and variations thereof are open-ended inclusions, that is, "include/comprise but not limited to". The term "based on" is "based, at least in part, on". The term "one embodiment" means "at least one embodiment"; the term "another embodiment" means "at least one another embodiment"; the term "some embodiments" means "at least some embodiments". Related definitions of other terms will be given in the description below.

It should be noted that the concepts of "first" and "second" mentioned in the present disclosure are only used to distinguish between different apparatuses, modules or units, and are not used to limit the order or interdependence of the functions performed by these apparatuses, modules or units.

It should be noted that the modifications of "one" and "a plurality of" mentioned in the present disclosure are schematic and non-restrictive, and those skilled in the art should understand that unless the context clearly indicates otherwise, they should be understood as "one or more".

The names of messages or information exchanged between a plurality of apparatuses in the implementations of the present disclosure are only used for illustrative purposes, and are not intended to limit the scope of these messages or information.

It should be understood that before using the technical solutions disclosed in the embodiments of the present disclosure, users should be informed of the type, scope of use, usage scenarios, etc. of personal information involved in the present disclosure in an appropriate manner according to relevant laws and regulations, and the authorization of the users should be obtained.

For example, in response to receiving an active request from the user, sending prompt information to the user to explicitly prompt the user that the operation requested to be performed will require acquisition and use of the user's personal information. Thus, the user can autonomously select whether to provide personal information to software or hardware such as an electronic device, an application, a server, or a storage medium that performs an operation of the technical solution of the present disclosure according to the prompt information.

As an optional but non-limiting implementation, a manner of sending the prompt information to the user in response to receiving the active request from the user may be, for example, a pop-up window, and the prompt information may be presented in the pop-up window in a text form. In addition, the pop-up window may also carry a selection control for the user to select "agree" or "disagree" to provide personal information to the electronic device.

It should be understood that the above process of notifying and acquiring user authorization is only schematic, and does not limit the implementations of the present disclosure, and other methods that meet relevant laws and regulations may also be applied to the implementations of the present disclosure.

It should be understood that the data involved in the technical solution (including but not limited to the data itself, data acquisition or use) should comply with the requirements of corresponding laws, regulations and related provisions.

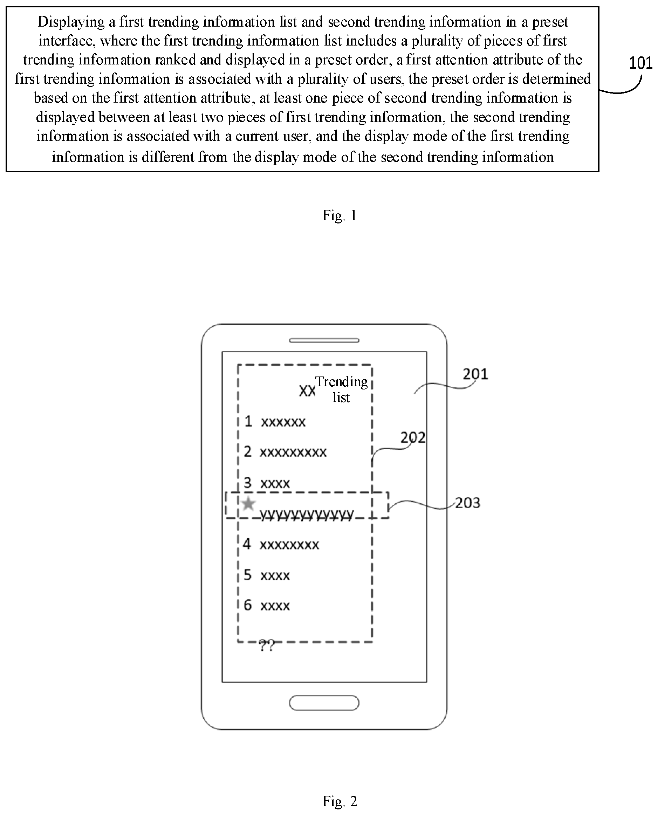

Fig. 1 is a flowchart of an information display method according to an embodiment of the present disclosure. The embodiment of the present disclosure is suitable for information display. The method may be implemented by an information display apparatus. The apparatus may be implemented in the form of software and/or hardware, or alternatively, by an electronic device. The electronic device may be a mobile terminal such as a mobile phone, a smart watch, a tablet computer and a personal digital assistant, or a device such as a Personal Computer (PC) terminal or a server.

As shown in Fig. 1, the method includes the following steps.

Step 101, displaying a first trending information list and second trending information in a preset interface, where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and the display mode of the first trending information is different from the display mode of the second trending information.

For example, the preset interface may be a web page in a network service platform or an interface in an application corresponding to the network service platform (which can be understood as a server of an application), which is not specifically limited. Various media contents may be published in the network service platform. The media content may include an image content, a video content, a text content or an audio content, and specifically may include a picture work, a video work, a text work, a graphic work, a music work or a live broadcast content, and the like. The media content may be published by the platform or by users through the network service platform. The title, the theme, the abstract or the search words associated with the media content may be information in the embodiment of the present disclosure, and may be a word, a phrase or a short sentence, in which the specific form is not limited. Trending information may be understood as information whose attention attribute meets the preset attention requirement, such as information whose attention attribute value is higher than the preset attention value. The attention attribute may include one or more parameters. The specific attention value is determined according to the parameter value. The parameter may include, for example, one or more of the following: the number of displaying times of the associated media content (which may be a plurality of contents) of the information, the number of users viewing the associated media content of the information, the number of interaction times of users based on the associated media content of the information, or the number of search hit times of the associated media content of the information. There may be one or more associated media contents of the information. For example, for a trending event, different users have published different media contents, that is, all these media contents are related to the trending event. There are a plurality of associated media contents of the information corresponding to the trending event.

For example, the first trending information and the second trending information may be understood as two different types of trending information. The attention attribute of the first trending information is denoted as the first attention attribute. The first attention attribute is associated with a plurality of users. The plurality of users may be users whose number is greater than a preset number threshold, for example, all users of a network service platform, which may also be referred to as the entire network users. For example, for the first information, the corresponding first attention attribute may include the total number of users among the entire network users who have viewed the associated media content of the first information. The first attention attribute may characterize the attention of most users to information. The second trending information is associated with the current user. The current user is the user who is currently viewing the preset interface. For example, the second trending information displayed to different users may be different. Optionally, the attention attribute of the second trending information is denoted as the second attention attribute. The second attention attribute of the second trending information may be associated with the current user. The second attention attribute may characterize the estimated attention of the current user to the information.

For example, the first trending information list includes a plurality of pieces of first trending information ranked and displayed in a preset order. The preset order (which may also be denoted as the first order) is determined based on the first attention attribute. For example, each piece of first trending information in the first trending information list is ranked in a descending order according to the attribute value of the corresponding first attention attribute, that is, the first trending information with higher attention ranks higher. The first trending information list may be understood as a centralized list, which may characterize the ranking of the trending information that most users pay attention to. For example, trending information may be obtained by screening from a preset information base, and the candidate information in the preset information base may be ranked in a descending order according to the attribute value of the first attention attribute to obtain a first sequence. The first preset number of candidate information ranked higher in the first sequence may be selected as the first trending information in the first trending information list. The source of the candidate information in the preset information base is not limited, which, for example, may be information determined according to the media content of the entire network in the latest week.

In the embodiment of the present disclosure, at least one piece of second trending information is displayed between at least two pieces of first trending information, that is, one or more pieces of second trending information are displayed interspersed within the first trending information list. The display mode of the first trending information is different from the display mode of the second trending information, which is convenient for users to quickly distinguish the types of trending information.

Optionally, the candidate information in the preset information base may be ranked in a descending order according to the attribute value of the second attention attribute to obtain a second sequence. The second preset number of candidate information ranked higher in the second sequence may be selected as the second trending information displayed in the preset interface.

Optionally, the second trending information is different from the first trending information. If some first trending information in the first trending information list meets the condition of becoming the second trending information because of being ranked higher in the second sequence, the first trending information may be displayed as the trending information in the first trending information list instead of as the second trending information through deduplication. Alternatively, when selecting the second trending information from the second sequence, a second preset number of candidate information ranked higher in the second sequence rather than in the first sequence is selected as the second trending information displayed in the preset interface.

Fig. 2 is a schematic diagram of an interface according to an embodiment of the present disclosure. As shown in Fig. 2, a first trending information list 202 and a second trending information 203 are displayed in a preset interface 201. The first trending information list 202 contains a plurality of pieces of first trending information ranked and displayed in a preset order (for example, six in the figure). The second trending information 203 is displayed between two pieces of first trending information (sequence number 3 and sequence number 4). The user may view two types of trending information at the same time in the preset interface 201, taking into account the viewing of global trending information and different recommended trending information.

In the information display method according to the embodiment of the present disclosure, a first trending information list and second trending information are displayed in a preset interface, where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and the display mode of the first trending information is different from the display mode of the second trending information. By using the technical scheme, the trending information list associated with a plurality of users and different recommended trending information displayed interspersed within the list can be displayed in the same interface at the same time. Moreover, it is convenient for the user to quickly distinguish the types of trending information through different display modes, so as to meet diverse trending information viewing requirements of the user.

In some embodiments, the display mode of the first trending information being different from the display mode of the second trending information, includes: a sequence number identifier being displayed at a first associated position of the first trending information, and/or a preset identifier being displayed at a first associated position of the second trending information, where the preset identifier is different from the sequence number identifier. Therefore, it is convenient for users to distinguish the first trending information and the second trending information more quickly.

For example, the first associated position of the trending information may be the head position of the trending information. As shown in Fig. 2, a sequence number identifier is displayed at the head position of the first trending information. The sequence number identifier is a specific sequence number. A preset identifier is displayed at the head position of the second trending information. The preset identifier may be a preset pattern identifier, such as a five-pointed star identifier in the figure.

In some embodiments, the display mode of the first trending information being different from the display mode of the second trending information, includes: prompt information being displayed at a second associated position of the second trending information, where the prompt information is configured to indicate an association mode between the second trending information to which the prompt information belongs and the current user. Therefore, it is convenient for the user to quickly know the association relationship between the currently displayed second trending information and himself, so as to further understand the reason why the second trending information appears in the preset interface.

For example, the second associated position of the second trending information may be the tail position of the second trending information (for example, adjacent to the last character of the second trending information) or the interface boundary position of the second trending information in a horizontal direction.

In some embodiments, a second attention attribute of the second trending information is associated with the current user. Determining the second attention attribute based on an association mode between the second trending information and the current user includes: determining the second attention attribute of the second trending information with respect to the current user based on interaction information of the current user. It should be noted that the interaction information is acquired based on the authorization of the current user, which is used to better push different trending information to the user.

For example, there may be a plurality of association mode between the second trending information and the current user, and different association modes may correspond to different prompt information.

In some embodiments, the association mode between the second trending information and the current user includes at least one of (1) to (3) below.

(1) A sequence number of the second trending information in a historical preset trending information list is less than a preset sequence number threshold, and the second trending information is in an unread state with respect to the current user, where the preset trending information list is updated at a preset frequency, and a difference between current time and update time of the historical preset trending information list is less than a preset duration.

For example, the preset trending information list may include the first trending information list, and may further include other types of lists, such as a preset theme list. The preset theme may include, for example, local city, entertainment or sports. The preset trending information list is updated at a preset frequency, such as every minute or every 3 minutes. The preset sequence number threshold may be set according to the actual situation, for example, the preset sequence number threshold may be 2. The preset duration may be set according to the actual situation, such as one day. For example, if some trending information have appeared as the top spot in the historical first trending information list within one day, and the current user has not viewed the trending information, the trending information may be displayed as the second trending information between two pieces of first trending information in the current first trending information list. The second trending information does not exist in the current first trending information list. Thus, the user can view the missed first trending information as the top spot in the past period in the process of viewing the current first trending information list.

(2) The second trending information belongs to a preset theme or a preset content type, and an interaction of the current user with the preset theme or the preset content type meets a preset condition.

For example, the preset theme may include a trending event or a preset activity, etc. The preset content type may include the content type classified according to a preset classification method, such as an entertainment type, a sports type or a technology type. For example, the interaction with the preset theme or the preset content type may include paying attention to, participating in, commenting on, etc. The preset condition may include, for example, having paid attention to, participated in, commented on an associated media content, etc. It should be noted that the above interaction related data is acquired under the authorization of the current user. For example, if the user has commented on the associated media content of some trending information, when there is a new progress of the trending event associated with the trending information, the candidate information of the trending event may become the second trending information. For example, if the current user has commented on the trending information of "xx match started in xx city on xx day", the trending information of "performance of xx team in xx match" may become the second trending information to be inserted into the first trending information list. For another example, if interaction of the current user with entertainment news meets the preset condition, the trending information in the entertainment list may be inserted into the first trending information list as the second trending information.

(3) The second trending information is associated with a target user, and the target user has a preset association relationship with the current user.

For example, the preset association relationship may include, for example, a one-way attention relationship or a two-way attention relationship. The second trending information is associated with the target user, and may include, for example, at least one of the following: the target user has commented on the associated media content of the second trending information, the associated media content of the second trending information is released by the target user, or the content of the associated media content of the second trending information is associated with the target user.

Optionally, there may be other association modes, which are not specifically limited. When determining the second trending information and taking into account a plurality of association modes, a priority or weight may be set for different association modes, and the second trending information that may be displayed in the preset interface may be determined comprehensively according to the priority or weight.

In some embodiments, an index value of a preset interaction index of an associated media content of the second trending information meets a preset requirement. For example, the preset interaction index may include the number of comments, the number of likes and the number of views, and the corresponding interaction mode includes comments and likes. The preset requirement may be greater than the corresponding threshold or may be ranked as a preset ranking within a preset range. For example, if the number oflikes of the associated media content of the candidate information is the largest among the number of likes of the associated media content of each candidate information in the preset information base, the candidate information may become the second trending information.

In some embodiments, a plurality of pieces of second trending information are displayed in the preset interface. At least one piece of second trending information is displayed respectively at a first adjacent position of the first trending information with a plurality of first preset sequence numbers. Therefore, the distribution of the second trending information in the preset interface can be more uniform, and the convenience of viewing different types of trending information by users may be considered.

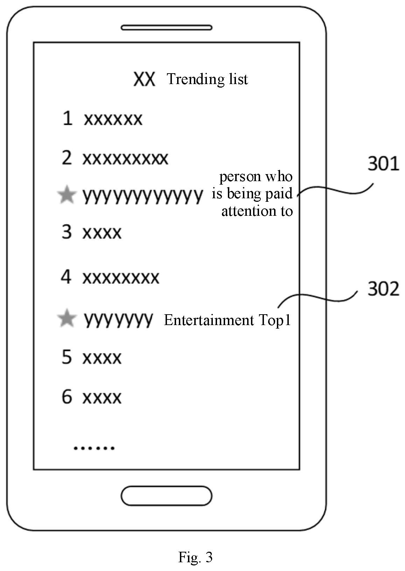

Fig. 3 is a schematic diagram of another interface according to an embodiment of the present disclosure. As shown in Fig. 3, the first preset sequence number includes 2 and 4. The first adjacent position may be below the first trending information with the first preset sequence number. A piece of second trending information is displayed below the first trending information with sequence numbers 2 and 4, respectively. Prompt information is displayed at the second associated position (the interface boundary position in a horizontal direction in the figure) of each piece of second trending information, such as first prompt information 301, which is used to prompt that the second trending information is displayed here because of being related to a person that the current user pays attention to, and such as second prompt information 302, which is used to prompt that the second trending information is displayed here because the interaction of the current user with the entertainment type meets the preset condition.

In some embodiments, a plurality of pieces of second trending information are consecutively displayed at a second adjacent position of the first trending information with a single second preset sequence number. Therefore, the second trending information can be displayed in the preset interface in a more concentrated manner, which is convenient for the user to view various types of trending information in a concentrated manner.

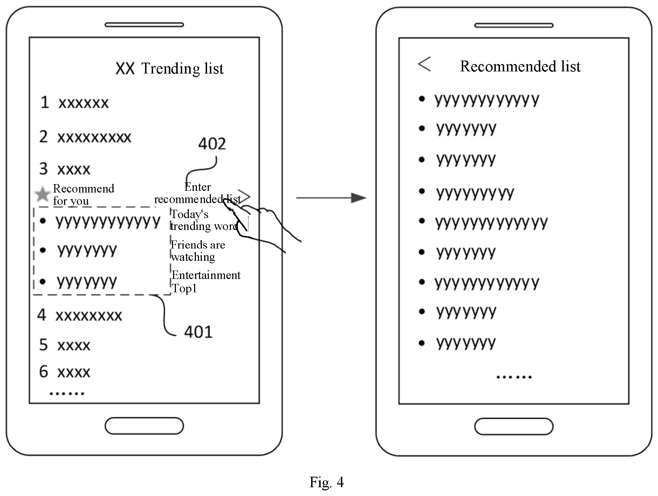

Fig. 4 is a schematic diagram of interaction of an interface according to an embodiment of the present disclosure. As shown in Fig. 4, the number of the second preset sequence numbers is one, specifically the sequence number 3. The second adjacent position 401 may be below the first trending information with the second preset sequence number. Three pieces of second trending information are consecutively displayed below the first trending information with the sequence number 3. Prompt information is displayed at the second associated position (e.g., the interface boundary position in a horizontal direction in the figure) of each piece of second trending information.

In some embodiments, the method further includes: displaying a first preset control in a first associated region of the first trending information with at least one first preset sequence number, where the first preset control is configured to switch displaying and hiding of the second trending information at the first adjacent position. Therefore, the user can flexibly switch whether to display the second trending information in the preset interface through the first preset control, so as to meet the trending information viewing requirement of the user in different situations.

For example, the first associated region may be, for example, a tail region of the first trending information (for example, adjacent to the last character of the first trending information) or an interface boundary region of the first trending information in a horizontal direction. When there are a plurality of first associated regions, each first associated region may correspondingly display a first preset control, and each first preset control is configured to switch displaying and hiding of the second trending information of the corresponding first adjacent position, that is, the displaying and hiding of each piece of second trending information may be switched independently. When there is one first associated region, the first preset control is configured to switch displaying and hiding of all the second trending information displayed in the preset interface, that is, the displaying and hiding of a plurality of pieces of second trending information may be switched synchronously.

In some embodiments, the method further includes: displaying a second preset control in a second associated region of the first trending information with the second preset sequence number, where the second preset control is configured to switch displaying and hiding of the plurality of pieces of second trending information at the second adjacent position. Therefore, the user can flexibly switch whether to display the second trending information in the preset interface through the first preset control, so as to meet the trending information viewing requirement of the user in different situations.

For example, the second associated region may be, for example, a tail region of the first trending information (for example, adjacent to the last character of the first trending information) or an interface boundary region of the first trending information in a horizontal direction.

In some embodiments, the method further includes: displaying a third preset control in a third associated region of at least one piece of second trending information in the preset interface, where the third preset control is configured to trigger switching from displaying the first trending information list to displaying a second trending information list, and the number of the second trending information in the second trending information list is greater than the number of the second trending information displayed in the preset interface. Therefore, the user can conveniently switch to displaying more second trending information related to himself in the preset interface.

For example, the second trending information list includes second trending information displayed in the preset interface, and further includes second trending information not displayed in the preset interface. The second trending information list may include a plurality of pieces of second trending information ranked and displayed in a second order, and the second order is determined based on the second attention attribute.

For example, as shown in Fig. 4, a third preset control 402 is displayed in the third associated region (such as the upper right region) of a first piece of second trending information. After the user clicks the third preset control 402, the list interface of the second trending information list may be entered, and the second trending information list (e.g., the recommended list in the figure) may displayed in the list interface.

In some embodiments, after displaying the first trending information list and second trending information in the preset interface, the method further includes: entering a target interface in response to target second trending information displayed in the preset interface being triggered; and displaying an associated media content of the target second trending information in the target interface. Therefore, the user can conveniently select the second trending information that he is interested in, and then view associated media content of the second trending information. The target second trending information may be understood as the second trending information selected and triggered by the current user. The triggering mode may be, for example, clicking.

For example, the target second trending information may be used as a search term, and the media content included in the search result may be determined as the associated media content of the target second trending information, and displayed in the target interface. At this time, the target interface may be regarded as a trending search result interface.

In some embodiments, after entering the target interface in response to the target second trending information displayed in the preset interface being triggered, the method further includes: displaying an associated list entry of the target second trending information in the target interface, where the associated list entry is configured to trigger entering a list interface of a third trending information list, and a list theme of the third trending information list is determined based on an association mode between the target second trending information and the current user. Therefore, it is convenient for the user to quickly view more trending information related to the association mode of the target second trending information.

For example, the list theme may be used to describe the common feature of trending information included in the list. The list theme of the third trending information list is also the common feature of a plurality of pieces of third trending information included in the third trending information list. The common feature is determined according to the association mode between the target second trending information and the current user. Optionally, the list theme may be related to the prompt information corresponding to the target second trending information. For example, if the prompt information is "a person who is paid attention to", the corresponding list topic is the person who is paid attention to. The third trending information may be trending information related to the person that the current user pays attention to. For another example, if the prompt information is "Entertainment Topl", the corresponding list theme is an entertainment list, and the third trending information may be trending information in the entertainment field.

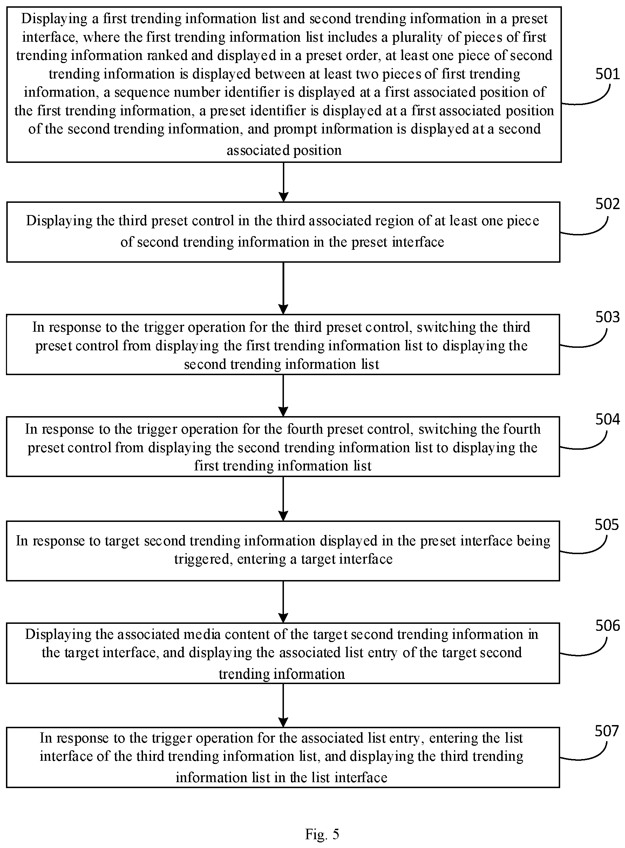

Fig. 5 is a flowchart of another information display method according to an embodiment of the present disclosure. The embodiment of the present disclosure is optimized on the basis of various alternatives in the above embodiment. Specifically, the method includes the following steps.

Step 501, displaying a first trending information list and second trending information in a preset interface, where the first trending information list includes a plurality of pieces of first trending information ranked and displayed in a preset order, at least one piece of second trending information is displayed between at least two pieces of first trending information, a sequence number identifier is displayed at a first associated position of the first trending information, a preset identifier is displayed at a first associated position of the second trending information, and prompt information is displayed at a second associated position.

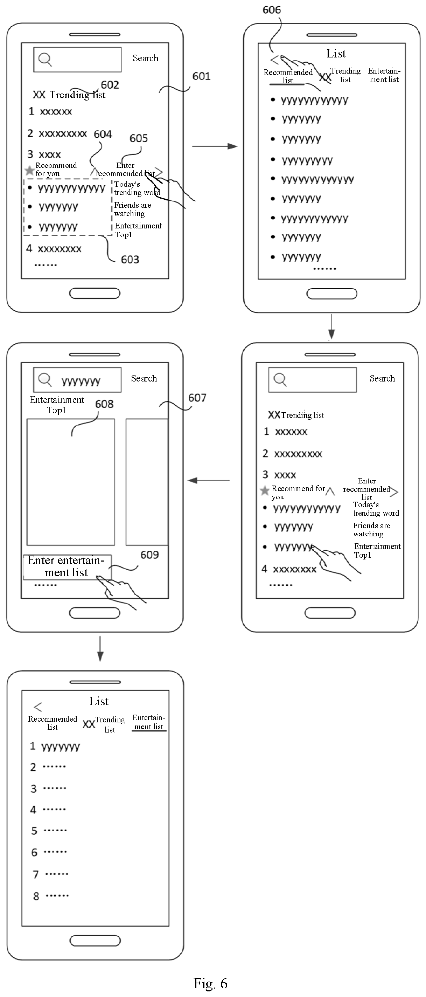

For example, the preset interface may be a search interface. Fig. 6 is a schematic diagram of interaction of another interface according to the embodiment of the present disclosure. As shown in Fig. 6, the preset interface 601 is a search interface. The first trending information list 602 and the second trending information 603 may be displayed below the search box. The first trending information in the first trending information list 602 may be ranked and displayed according to the attention attribute values related to the entire network users. Three second trending information is consecutively displayed below the preset sequence number 3. The sequence number is displayed at the first associated position of the first trending information. The preset identifier (e.g., the dot in the figure) is displayed at the first associated position of the second trending information, and the prompt information is displayed at the second associated position, which is configured to prompt the associated mode between the corresponding second trending information and the current user.

Optionally, the first preset control 604 is displayed in the first associated region of the first trending information. After the user triggers the first preset control 604, it may be switched to hiding the second trending information 603. After the user triggers the first preset control 604 again, it may be switched to displaying the second trending information 603.

Step 502, displaying the third preset control in the third associated region of at least one piece of second trending information in the preset interface.

As shown in Fig. 6, the third preset control 605 is displayed in the third associated region (such as the upper right region) of the first piece of second trending information in the preset interface 601.

Step 503, in response to the trigger operation for the third preset control, switching the third preset control from displaying the first trending information list to displaying the second trending information list.

For example, as shown in Fig. 6, after a user clicks the third preset control 605, the user can enter the list interface and the second trending information list is displayed in the list interface, that is, the recommended list shown in the figure. The number of the second trending information in the second trending information list is greater than the number of the second trending information displayed in the preset interface. Optionally, prompt information may also be displayed at the associated position of each piece of second trending information in the second trending information list, the prompt information is configured to indicate an association mode between the second trending information to which the prompt information belongs and the current user.

Step 504, in response to the trigger operation for the fourth preset control, switching the fourth preset control from displaying the second trending information list to displaying the first trending information list.

For example, as shown in Fig. 6, after a user clicks the fourth preset control 606, the user returns to the preset interface 601.

Step 505, in response to target second trending information displayed in the preset interface being triggered, entering a target interface.

For example, as shown in Fig. 6, when a user wants to view the associated media content of some second trending information, such as the second trending information whose prompt information is entertainment Top1, the second trending information may be triggered in a clicking manner, thereby entering the target interface 607. The target interface 607 may be understood as a search result interface obtained by searching with the target second trending information as a search term.

Step 506, displaying the associated media content of the target second trending information in the target interface, and displaying the associated list entry of the target second trending information.

As shown in Fig. 6, the associated media content 608 of the entertainment Top1 and the associated list entry 609 of the entertainment Top1may be displayed in the target interface 607. There may be a plurality of associated media contents. The user can view more associated media content by operations such as inputting and sliding.

Step 507, in response to the trigger operation for the associated list entry, entering the list interface of the third trending information list, and displaying the third trending information list in the list interface.

As shown in Fig. 6, after a user clicks the associated list entry 609, the list interface of the entertainment list is entered and the entertainment list is displayed in the list interface.

In the information display method according to the embodiment of the present disclosure, the trending information list associated with a plurality of users and different recommended trending information associated with the current user and displayed interspersed within the list may be displayed in the same interface at the same time. It is convenient for the user to quickly distinguish the types of trending information through different display modes. For the trending information displayed interspersed, the control for entering the complete list is provided, which is convenient for the user to view more trending information of the same type. After the user selects to view the associated media content of some trending information, the associated list entry is displayed, which is convenient for the user to quickly view the list interface of the associated list theme and meet diverse trending information viewing requirements of the user.

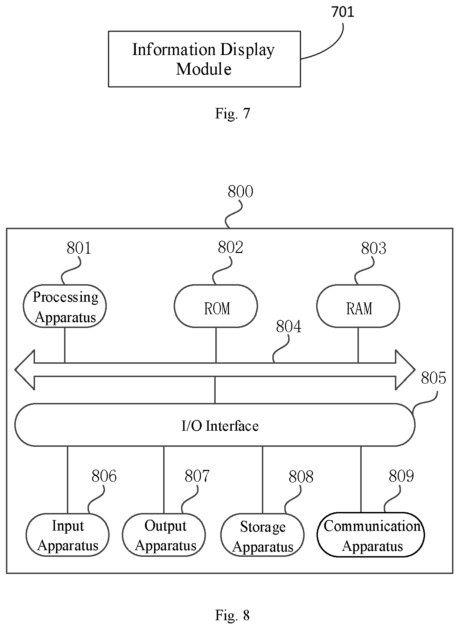

Fig. 7 is a schematic structural diagram of an information display apparatus according to an embodiment of the present disclosure. As shown in Fig. 7, the apparatus includes:
an information display module 701, which is configured to display a first trending information list and second trending information in a preset interface,
where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and the display mode of the first trending information is different from the display mode of the second trending information.

In the information display apparatus according to the embodiment of the present disclosure, the trending information list associated with a plurality of users and different recommended trending information displayed interspersed within the list may be displayed in the same interface at the same time. Moreover, it is convenient for the user to quickly distinguish the types of trending information through different display modes, so as to meet diverse trending information viewing requirements of the user.

Optionally, the second attention attribute of the second trending information is associated with the current user.

Optionally, the display mode of the first trending information being different from the display mode of the second trending information, includes: a sequence number identifier being displayed at a first associated position of the first trending information, and/or a preset identifier being displayed at a first associated position of the second trending information, where the preset identifier is different from the sequence number identifier.

Optionally, the display mode of the first trending information being different from the display mode of the second trending information, includes: prompt information being displayed at a second associated position of the second trending information, where the prompt information is configured to indicate an association mode between the second trending information to which the prompt information belongs and the current user.

Optionally, a plurality of pieces of second trending information are displayed in the preset interface, where
at least one piece of second trending information is displayed respectively at a first adjacent position of the first trending information with a plurality of first preset sequence numbers; or
a plurality of pieces of second trending information are consecutively displayed at a second adjacent position of the first trending information with a single second preset sequence number.

Optionally, the apparatus further includes:
a first control display module, which is configured to display a first preset control in a first associated region of the first trending information with at least one first preset sequence number, where the first preset control is configured to switch displaying and hiding of the second trending information at the first adjacent position; or
a second control display module, which is configured to display a second preset control in a second associated region of the first trending information with the second preset sequence number, where the second preset control is configured to switch displaying and hiding of the plurality of pieces of second trending information at the second adjacent position.

Optionally, the apparatus further includes:
a third control display module, which is configured to display a third preset control in a third associated region of at least one piece of second trending information in the preset interface, where the third preset control is configured to trigger switching from displaying the first trending information list to displaying a second trending information list, and the number of the second trending information in the second trending information list is greater than the number of the second trending information displayed in the preset interface.

Optionally, the apparatus further includes:
a target interface entry module, which is configured to, after displaying the first trending information list and second trending information in the preset interface, enter a target interface in response to target second trending information displayed in the preset interface being triggered; and
an associated media content display module, which is configured to display an associated media content of the target second trending information in the target interface.

Optionally, the apparatus further includes:
a list entry display module, which is configured to, after entering the target interface in response to the target second trending information displayed in the preset interface being triggered, display an associated list entry of the target second trending information in the target interface, where the associated list entry is configured to trigger entering a list interface of a third trending information list, and a list theme of the third trending information list is determined based on an association mode between the target second trending information and the current user.

Optionally, a second attention attribute of the second trending information is associated with the current user. Determining the second attention attribute based on an association mode between the second trending information and the current user includes: determining the second attention attribute of the second trending information with respect to the current user based on interaction information of the current user.

Optionally, the association mode between the second trending information and the current user includes at least one of the following:
a sequence number of the second trending information in a historical preset trending information list being less than a preset sequence number threshold, and the second trending information being in an unread state with respect to the current user, where the preset trending information list is updated at a preset frequency, and a difference between current time and update time of the historical preset trending information list is less than a preset duration,
the second trending information belonging to a preset theme or a preset content type, and an interaction of the current user with the preset theme or the preset content type meets a preset condition; and
the second trending information being associated with a target user, and the target user having a preset association relationship with the current user.

Optionally, an index value of a preset interaction index of an associated media content of the second trending information meets a preset requirement.

The information display apparatus according to the embodiment of the present disclosure may implement the information display method according to any embodiment of the present disclosure, and has corresponding functional modules and beneficial effects for implementing the method.

It is worth noting that each of the units and modules included in the above apparatus is only divided according to the functional logic, but it is not limited to the above division, as long as the corresponding functions may be realized. In addition, the specific names of each functional unit are only for the convenience of distinguishing each other, and are not intended to limit the scope of protection of the embodiment of the present disclosure.

Fig. 8 is a schematic structural diagram of an electronic device according to an embodiment of the present disclosure. Referring to Fig. 8, Fig. 8 illustrates a structural schematic diagram of an electronic device (e.g. a terminal device or a server in Fig. 8) 800 suitable for implementing embodiments of the present disclosure. The terminal device in embodiments of the present disclosure may include but not limited to a mobile terminal such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in Fig. 8 is merely an example, and should not pose any limitation to the functions and the range of use of the embodiments of the present disclosure.

As illustrated in Fig. 8, the electronic device 800 may include a processing apparatus 801 (e.g., a central processing unit, a graphics processing unit, etc.), which may perform various suitable actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Generally, the following apparatus may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. Although Fig. 8 illustrates the electronic device 800 having various apparatuses, it should be understood that not all of the illustrated apparatuses are necessarily implemented or included. More or fewer apparatuses may be implemented or included alternatively.

Particularly, according to embodiments of the present disclosure, the processes described above with reference to the flowcharts may be implemented as a computer software program. For example, an embodiment of the present disclosure includes a computer program product, which includes computer programs carried by a non-transitory computer-readable medium. The computer programs include program codes for performing the methods shown in the flowcharts. In such embodiments, the computer program may be downloaded and installed from the network through the communication apparatus 809, or may be installed from the storage apparatus 808, or may be installed from the ROM 802. When the computer programs are executed by the processing apparatus 801, the above-mentioned functions defined in the methods of embodiments of the present disclosure are performed.

The names of messages or information exchanged between a plurality of apparatuses in the implementations of the present disclosure are only used for illustrative purposes, and are not intended to limit the scope of these messages or information.

The electronic device provided by the embodiment of the present disclosure belongs to the same inventive concept as the information display method provided by the above-described embodiments, and technical details not exhaustively described in the present embodiments can be found in the above-described embodiments, and the present embodiments have the same beneficial effects as the above-described embodiments.

An embodiment of the present disclosure provides a computer storage medium on which computer programs are stored. The programs, upon being executed by a processor, realize the information display method provided by the above embodiments.

An embodiment of the present disclosure provides a computer program product, which includes computer programs which, upon being executed by a processor, implement the information display method provided by the above embodiments.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some embodiments, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to display a first trending information list and second trending information in a preset interface, where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. The name of the module does not constitute a limitation of the unit itself under certain circumstances. For example, the information display module may also be described as a "module for displaying a first trending information list and second trending information in a preset interface".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, an information display method is provided, which includes:
displaying a first trending information list and second trending information in a preset interface,
where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

According to one or more embodiments of the present disclosure, a second attention attribute of the second trending information is associated with the current user.

According to one or more embodiments of the present disclosure, the display mode of the first trending information being different from the display mode of the second trending information includes:
a sequence number identifier being displayed at a first associated position of the first trending information, and/or a preset identifier being displayed at a first associated position of the second trending information, where the preset identifier is different from the sequence number identifier.

According to one or more embodiments of the present disclosure, the display mode of the first trending information being different from the display mode of the second trending information includes:
prompt information being displayed at a second associated position of the second trending information, where the prompt information is configured to indicate an association mode between the second trending information to which the prompt information belongs and the current user.

According to one or more embodiments of the present disclosure, a plurality of pieces of second trending information are displayed in the preset interface, where
at least one piece of second trending information is displayed respectively at a first adjacent position of the first trending information with a plurality of first preset sequence numbers; or
a plurality of pieces of second trending information are consecutively displayed at a second adjacent position of the first trending information with a single second preset sequence number.

According to one or more embodiments of the present disclosure, the method further includes:
displaying a first preset control in a first associated region of the first trending information with at least one first preset sequence number, where the first preset control is configured to switch displaying and hiding of the second trending information at the first adjacent position; or
displaying a second preset control in a second associated region of the first trending information with the second preset sequence number, where the second preset control is configured to switch displaying and hiding of the plurality of pieces of second trending information at the second adjacent position.

According to one or more embodiments of the present disclosure, the method further includes:
displaying a third preset control in a third associated region of at least one piece of second trending information in the preset interface, where the third preset control is configured to trigger switching from displaying the first trending information list to displaying a second trending information list, and a number of the second trending information in the second trending information list is greater than a number of the second trending information displayed in the preset interface.

According to one or more embodiments of the present disclosure, after displaying the first trending information list and the second trending information in the preset interface, the method further includes:
entering a target interface in response to target second trending information displayed in the preset interface being triggered; and
displaying an associated media content of the target second trending information in the target interface.

According to one or more embodiments of the present disclosure, after entering the target interface in response to the target second trending information displayed in the preset interface being triggered, the method further includes:
displaying an associated list entry of the target second trending information in the target interface, where the associated list entry is configured to trigger entering a list interface of a third trending information list, and a list theme of the third trending information list is determined based on an association mode between the target second trending information and the current user.

According to one or more embodiments of the present disclosure, a second attention attribute of the second trending information is associated with the current user. Determining the second attention attribute based on an association mode between the second trending information and the current user includes:
determining the second attention attribute of the second trending information with respect to the current user based on interaction information of the current user.

According to one or more embodiments of the present disclosure, an association mode between the second trending information and the current user includes at least one of followings:
a sequence number of the second trending information in a historical preset trending information list being less than a preset sequence number threshold, and the second trending information being in an unread state with respect to the current user, where the preset trending information list is updated at a preset frequency, and a difference between current time and update time of the historical preset trending information list is less than a preset duration;
the second trending information belonging to a preset theme or a preset content type, and an interaction of the current user with the preset theme or the preset content type meeting a preset condition; and
the second trending information being associated with a target user, and the target user having a preset association relationship with the current user.

According to one or more embodiments of the present disclosure, an index value of a preset interaction index of an associated media content of the second trending information meets a preset requirement.

According to one or more embodiments of the present disclosure, an information display apparatus is provided, which includes:
an information display module, configured to display a first trending information list and second trending information in a preset interface,
where the first trending information list includes a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

According to one or more embodiments of the present disclosure, an electronic device is provided, which includes:
one or more processors; and
a storage apparatus, configured to store one or more programs,
where the one or more programs, upon being executed by the one or more processors, cause the one or more processors to implement the information display method provided by embodiments of the present disclosure.

According to one or more embodiments of the present disclosure, a storage medium including computer-executable instructions is provided. The computer-executable instructions, upon being executed by a computer processor, are configured to implement the information display method provided by embodiments of the present disclosure.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

**In** addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An information display method, comprising:
displaying a first trending information list and second trending information in a preset interface,
wherein the first trending information list comprises a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

2. The method according to claim 1, wherein the display mode of the first trending information being different from the display mode of the second trending information comprises:
a sequence number identifier being displayed at a first associated position of the first trending information, and/or a preset identifier being displayed at a first associated position of the second trending information, wherein the preset identifier is different from the sequence number identifier.

3. The method according to claim 1, wherein the display mode of the first trending information being different from the display mode of the second trending information comprises:
prompt information being displayed at a second associated position of the second trending information, wherein the prompt information is configured to indicate an association mode between the second trending information to which the prompt information belongs and the current user.

4. The method according to claim 1, wherein a plurality of pieces of second trending information are displayed in the preset interface, wherein
at least one piece of second trending information is displayed respectively at a first adjacent position of the first trending information with a plurality of first preset sequence numbers; or
a plurality of pieces of second trending information are consecutively displayed at a second adjacent position of the first trending information with a single second preset sequence number.

5. The method according to claim 4, further comprising:
displaying a first preset control in a first associated region of the first trending information with at least one first preset sequence number, wherein the first preset control is configured to switch displaying and hiding of the second trending information at the first adjacent position; or
displaying a second preset control in a second associated region of the first trending information with the second preset sequence number, wherein the second preset control is configured to switch displaying and hiding of the plurality of pieces of second trending information at the second adjacent position.

6. The method according to claim 1, further comprising:
displaying a third preset control in a third associated region of at least one piece of second trending information in the preset interface, wherein the third preset control is configured to trigger switching from displaying the first trending information list to displaying a second trending information list, and a number of the second trending information in the second trending information list is greater than a number of the second trending information displayed in the preset interface.

7. The method according to claim 1, wherein after displaying the first trending information list and the second trending information in the preset interface, the method further comprises:
entering a target interface in response to target second trending information displayed in the preset interface being triggered; and
displaying an associated media content of the target second trending information in the target interface.

8. The method according to claim 7, wherein after entering the target interface in response to the target second trending information displayed in the preset interface being triggered, the method further comprises:
displaying an associated list entry of the target second trending information in the target interface, wherein the associated list entry is configured to trigger entering a list interface of a third trending information list, and a list theme of the third trending information list is determined based on an association mode between the target second trending information and the current user.

9. The method according to claim 1, wherein a second attention attribute of the second trending information is associated with the current user.

10. The method according to claim 9, wherein determining the second attention attribute based on an association mode between the second trending information and the current user comprises:
determining the second attention attribute of the second trending information with respect to the current user based on interaction information of the current user.

11. The method according to any one of claims 1 to 10, wherein an association mode between the second trending information and the current user comprises at least one of followings:
a sequence number of the second trending information in a historical preset trending information list being less than a preset sequence number threshold, and the second trending information being in an unread state with respect to the current user, wherein the preset trending information list is updated at a preset frequency, and a difference between current time and update time of the historical preset trending information list is less than a preset duration;
the second trending information belonging to a preset theme or a preset content type, and an interaction of the current user with the preset theme or the preset content type meeting a preset condition; and
the second trending information being associated with a target user, and the target user having a preset association relationship with the current user.

12. The method according to any one of claims 1 to 10, wherein an index value of a preset interaction index of an associated media content of the second trending information meets a preset requirement.

13. An information display apparatus, comprising:
an information display module, configured to display a first trending information list and second trending information in a preset interface,
wherein the first trending information list comprises a plurality of pieces of first trending information ranked and displayed in a preset order, a first attention attribute of the first trending information is associated with a plurality of users, the preset order is determined based on the first attention attribute, at least one piece of second trending information is displayed between at least two pieces of first trending information, the second trending information is associated with a current user, and a display mode of the first trending information is different from a display mode of the second trending information.

14. The apparatus according to claim 13, further comprising: a module, configured to implement the method according to any one of claims 2 to 12.

15. An electronic device, comprising:
one or more processors; and
a storage apparatus, configured to store one or more programs,
wherein the one or more programs, upon being executed by the one or more processors, cause the one or more processors to implement the information display method according to any one of claims 1 to 12.

16. A storage medium, comprising computer-executable instructions, wherein the computer-executable instructions, upon being executed by a computer processor, are configured to implement the information display method according to any one of claims 1 to 12.
